# EUROPEAN PATENT APPLICATION

(11) **EP 3 070 908 A1**
(43) Date of publication of application: **21.09.2016**
(21) Application number: 15305391.3
(22) Date of filing: 17.03.2015
(51) Int. Cl.: H04L 29/08

(54) **Methods, server and client for multi-part interactive content delivery**

(71) Applicant: ALCATEL LUCENT, 92100 Boulogne-Billancourt (FR)
(72) Inventor: Van Broeck, Sigurd, 2018 Antwerp (BE)
(74) Representative: D'Halleweyn, Nele Veerle Trees Gertrudis

(57) **Abstract**

A method for delivering from a server to a client interactive content comprising multiple parts, wherein said content is associated with content metadata representing functional dependencies and potential interaction dependencies, wherein a functional dependency represents a hardcoded loading dependency of a part of said multiple parts on another part of said multiple parts, wherein a potential interaction dependency represents a potential loading dependency of a part of said multiple parts on another part of said multiple parts, due to potential user interaction with said content; said method comprising at said server: determining a delivery order in which to deliver a set of parts of said multiple parts, taking into account said functional dependencies and said potential interaction dependencies; and transmitting said set of parts to said client in said delivery order; wherein said potential interaction dependencies have been determined prior to user interaction with said content.

## Description

### Technical Field

The technical field relates to interactive content delivery. Particular embodiments relate to a method and server for delivering interactive content comprising multiple parts to a client, to a method and client for obtaining interactive content comprising multiple parts from a server, to a computer program product for delivering or obtaining interactive content comprising multiple parts, and to a system for delivery of interactive content comprising multiple parts.

### Background

Web content obtained from origin servers for consumption by end users is delivered to user agents (browsers) running on an end user's device. Web applications provide interactive Web content and present the large majority of Web content available on the Internet today.

When a user installs a Web application on his device, he needs to wait for the installation to be completed (and rendered) before he can use the Web application (e.g. when installing from application delivery platforms). Moreover, when a user browses a Web application with his device, he needs to wait for the next part(s) (i.e. pages or page fragments) to be delivered and rendered before he can continue to work with the Web application. For bulky Web applications, that comprise many parts, the waiting time may be in the order of minutes.

A problem occurs if a user starts to run and use (i.e. interact with) the Web application - as soon as sufficient parts are available - and then starts an action for which the required parts are located at the end of the bulky delivery, he will still have to wait until the installation process completes.

### Summary

It is an object of embodiments of the present subject-matter to reduce latency for interacting with Web applications, particularly with bulky Web applications.

According to a first aspect of the present subject-matter, there is provided a method for delivering from a server to a client interactive content comprising multiple parts. Said content is associated with content metadata representing functional dependencies and potential interaction dependencies. A functional dependency represents a hardcoded loading dependency of a part of said multiple parts on another part of said multiple parts. A potential interaction dependency represents a potential loading dependency of a part of said multiple parts on another part of said multiple parts, due to potential user interaction with said content. Said method comprises at said server: determining a delivery order in which to deliver a set of parts of said multiple parts, taking into account said functional dependencies and said potential interaction dependencies; and transmitting said set of parts to said client in said delivery order. Said potential interaction dependencies have been determined prior to user interaction with said content.

In this manner, by transmitting the set of parts of the multiple parts in the delivery order, which was determined taking into account the functional dependencies and the potential interaction dependencies, it is possible to reduce latency for a user who is interacting with a bulky Web application that is being installed, since parts that are likely to be required after user interaction can be moved forward in the delivery order, in order to transmit those parts earlier to the client.

In particular, embodiments according to the present subject-matter allow the first user or users of content to benefit from reduced latency, because, prior to their interaction with the content, the potential interaction dependencies have already been determined.

Moreover, the number of requests that have to be transmitted can be reduced, advantageously in order to reduce the overall latency of obtaining the Web application. Additionally, in this manner, many if not all required resources can be made available to the user before the user actually needs them, in order to provide a seamless experience of the content.

In the present specification, 'parts' of interactive content may be taken to refer to separate web pages (that are typically more static) as well as to smaller resources that together form a separate web page (that is typically more dynamic).

In the present specification, 'representing something' may be taken to mean 'comprising information pertaining to something'.

In an embodiment, said potential interaction dependencies are at least partially determined in at least one of the following ways: by automated prediction by said server, based on automated analysis of said content by said server; and by pre-definition by an author of said content.

In this manner, the potential interaction dependencies can be automatically determined by the server, either beforehand or just-in-time, requiring no data analysis from previous actual user interaction; and/or the potential interaction dependencies can be efficiently pre-defined by the content author. This advantageously allows the first users of interactive content to benefit from less latency.

In an embodiment, said method comprises receiving from said client a request for transmitting a specific part of said content out of said delivery order. Said method comprises, in response to said receiving, performing the following: re-determining said delivery order, in order to prioritize delivery of said specific part; and transmitting remaining parts of said content including said specific part to said client, according to said re-determined delivery order. Alternatively, said method comprises, in response to said receiving, performing the following: transmitting said specific part to said client, separately from transmitting said parts of said content to said client in said delivery order; and re-determining said delivery order, in order to prevent double delivery of said specific part. Said method optionally comprises transmitting a notification of any e-determining to said client.

In this manner, double delivery of one or more parts of the content (i.e. specific Web resources of the Web application) can be prevented or at least limited.

In an embodiment, said transmitting is performed: in response to receiving from said client a request for transmitting said content to said client; or at least in part prior to receiving a request from said client for transmitting said content to said client.

In this manner, multiple delivery strategies can be accommodated.

In an embodiment, said content metadata comprises at least one of the following: a user-specific indication indicating a specific user, to allow retrieval and/or deletion of at least a part of said multiple parts based on said specific user; a user group-specific indication indicating a specific user group, to allow retrieval and/or deletion of at least a part of said multiple parts based on said specific user group; a time-specific indication indicating a specific time, to allow retrieval and/or deletion of at least a part of said multiple parts based on said specific time; a usage condition-specific indication indicating a specific usage condition, to allow retrieval and/or deletion of at least a part of said multiple parts based on said specific usage condition; and a fingerprint adapted to uniquely identify a specific version of at least a part of said multiple parts, to allow versioning comparison of at least a part of said multiple parts based on said fingerprint.

In this manner, caches can operate more efficiently, either in intermediaries 13 or at the user agent 12, since required data can be pre-fetched and superfluous data can be purged.

In an embodiment, said method comprises transmitting said content metadata to said client. Said content metadata is transmitted: bundled with a manifest file describing said content to be transmitted; or bundled with a first part of said content to be transmitted initially.

In this manner, the client can use the content metadata for improved fetching of further parts of the content. Also, intermediaries 13 can use the transmitted content metadata to better control caching and transmission of the parts. Moreover, efficient use is made of resources that are likely or necessary to provide to the client anyway.

In an embodiment, said method comprises transmitting said content metadata to said client. Said content metadata is transmitted as a separate web resource. Furthermore, said content is accessible via a first uniform resource identifier; said content metadata is accessible via a second uniform resource identifier; and said second uniform resource identifier is derivable from said first uniform resource identifier; or said second uniform resource identifier is listed in said first uniform resource identifier.

In this manner, the client can use the content metadata for improved fetching of further parts of the content. Also, intermediaries 13 can use the transmitted content metadata to better control caching and transmission of the parts. Moreover, no explicit separate notification of the location of the content metadata is required.

In an embodiment, said server is one of the following: an origin server communicatively coupled to said client, and storing said content; and a cache server communicatively coupled to said client and communicatively coupled to at least one of an origin server storing said content and at least one other cache server. Said content is obtained at said cache server respectively from said origin server or from said at least one other cache server.

In this manner, multiple delivery chain architectures can be accommodated.

According to another aspect of the present subject-matter, there is provided a method for obtaining at a client from a server interactive content comprising multiple parts. Said content is associated with content metadata representing functional dependencies and potential interaction dependencies. A functional dependency represents a hardcoded loading dependency of a part of said multiple parts on another part of said multiple parts. A potential interaction dependency represents a potential loading dependency of a part of said multiple parts on another part of said multiple parts, due to potential user interaction with said content. Said method comprises at said client: receiving a set of parts of said multiple parts in a delivery order. Said delivery order has been determined by said server, taking into account said functional dependencies and said potential interaction dependencies. Said potential interaction dependencies have been determined prior to user interaction with said content.

In an embodiment, said potential interaction dependencies have at least partially been determined in at least one of the following ways: by automated prediction by said server, based on automated analysis of said content at said server; and by pre-definition by an author of said content.

In an embodiment, said method comprises: transmitting to said server a request for transmitting a specific part of said content out of said delivery order. Said method comprises, in response to said transmitting, performing the following: receiving remaining parts of said content including said specific part from said server, according to a re-determined delivery order; wherein said re-determined delivery order has been re-determined by said server, in order to prioritize delivery of said specific part. Alternatively, said method comprises, in response to said receiving, performing the following: receiving said specific part from said server, separately from receiving said parts of said content to said client in said delivery order; wherein said delivery order has been re-determined by said server, in order to prevent double delivery of said specific part. Said method optionally comprises receiving a notification of any re-determining from said server.

In an embodiment, said receiving is performed: in response to transmitting to said server a request for transmitting said content to said client; or at least in part prior to transmitting a request to said server for transmitting said content to said client.

In an embodiment, said content metadata comprises at least one of the following: a user-specific indication indicating a specific user, to allow retrieval and/or deletion of at least a part of said multiple parts based on said specific user; a user group-specific indication indicating a specific user group, to allow retrieval and/or deletion of at least a part of said multiple parts based on said specific user group; a time-specific indication indicating a specific time, to allow retrieval and/or deletion of at least a part of said multiple parts based on said specific time; a usage condition-specific indication indicating a specific usage condition, to allow retrieval and/or deletion of at least a part of said multiple parts based on said specific usage condition; and a fingerprint adapted to uniquely identify a specific version of at least a part of said multiple parts, to allow versioning comparison of at least a part of said multiple parts based on said fingerprint.

In an embodiment, said method comprises receiving said content metadata from said server. Said content metadata is received: bundled with a manifest file describing said content to be received; or bundled with a first part of said content to be received initially.

In an embodiment, said method comprises receiving said content metadata from said server. Said content metadata is received as a separate web resource. Furthermore, said content is accessible via a first uniform resource identifier; said content metadata is accessible via a second uniform resource identifier; and said second uniform resource identifier is derivable from said first uniform resource identifier; or said second uniform resource identifier is listed in said first uniform resource identifier.

In an embodiment, said server is one of the following: an origin server communicatively coupled to said client, and storing said content; and a cache server communicatively coupled to said client and communicatively coupled to at least one of an origin server storing said content and at least one other cache server. Said content is obtained at said cache server respectively from said origin server or from said at least one other cache server.

According to another aspect of the present subject-matter, there is provided a computer program product comprising computer-executable instructions for performing a method when the program is run on a computer, the method comprising the steps of any one of the methods as described hereinabove.

The skilled person will understand that a computer program product may be a data carrier, a storage medium, a computer readable medium, a signal, or another entity carrying a computer program, specifically a computer program containing computer-executable instruction for performing that method when run on a computer.

According to another aspect of the present subject-matter, there is provided a server for delivering to a client interactive content comprising multiple parts. Said content is associated with content metadata representing potential interaction dependencies. A potential interaction dependency represents a potential dependency of a part of said content on another part of said content, due to potential user interaction with said content.
Said server comprises an order module and a transmission module.
Said order module is configured for determining a delivery order in which to deliver parts of said content, taking into account said potential interaction dependencies.

Said transmission module is configured for transmitting said parts of said content to said client in said delivery order.
Said potential interaction dependencies have been determined prior to user interaction with said content.

According to another aspect of the present subject-matter, there is provided a client for obtaining from a server interactive content comprising multiple parts. Said content is associated with content metadata representing potential interaction dependencies. A potential interaction dependency represents a potential dependency of a part of said content on another part of said content, due to potential user interaction with said content.
Said client comprises a reception module.
Said reception module is configured for receiving said parts of said content in a delivery order.
Said delivery order has been determined by said server, taking into account said potential interaction dependencies.
Said potential interaction dependencies have been determined prior to user interaction with said content.

According to another aspect of the present subject-matter, there is provided a system for delivery of interactive content comprising multiple parts, comprising a server as described hereinabove; and a client as described hereinabove, communicatively coupled to said server.

The skilled person will understand that the hereinabove described considerations and advantages for a given aspect or embodiment of the present subject-matter may also apply for other aspects and embodiments of the present subject-matter, *mutatis mutandis.*

### Brief Description of the Figures

The accompanying drawings are used to illustrate presently preferred non-limiting exemplary embodiments according to the present subject-matter. The above and other advantages of the features of embodiments according to the present subject-matter and objects of the present subject-matter will become more apparent and the present subject-matter will be better understood from the following detailed description when read in conjunction with the accompanying drawings, in which:
Figure 1 illustrates schematically a content delivery chain according to the state of the art;
Figure 2 illustrates schematically an example of multi-part content for delivery using a method embodiment according to the present subject-matter;
Figure 3 illustrates schematically another example of multi-part content for delivery using a method embodiment according to the present subject-matter;
Figure 4 illustrates schematically the operation of a method embodiment according to the present subject-matter on an example of multi-part content;
Figure 5 illustrates schematically the operation of a method embodiment according to the present subject-matter an another example of multi-part content;
Figure 6 illustrates schematically a functional architecture related to a system embodiment according to the present subject-matter;
Figure 7A illustrates schematically an example of multi-part content for delivery using a method embodiment according to the present subject-matter; and
Figure 7B illustrates schematically an example of multi-part content for delivery using a method embodiment according to the present subject-matter, including a number of potential interaction dependencies.

### Description of Embodiments

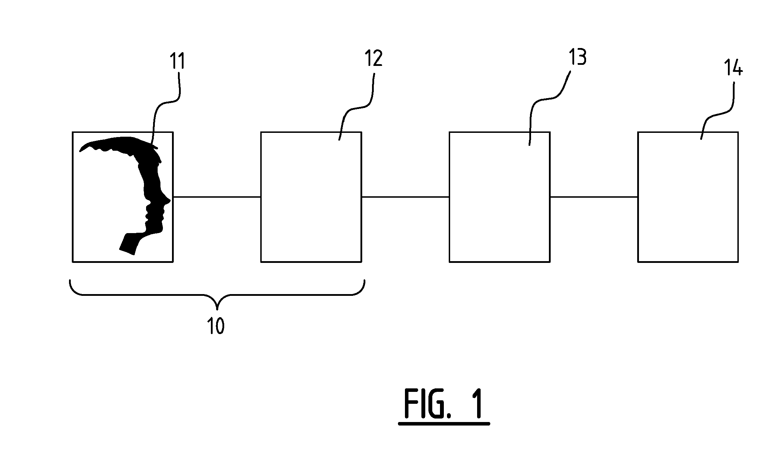

Figure 1 illustrates a content delivery chain according to the state of the art. The figure shows client premises 10, one or more content consumers 11, also known as end users or simply users, a user agent 12 aimed at displaying content, also known as a client 12, a cache server 13 at the edge of the network and aimed at delivering content, and an origin server 14 aimed at generating the content. Web content obtained from origin servers 14 for consumption by end users 11 is delivered via one or more intermediaries 13 to user agents 12 (e.g. browsers). The intermediaries 13 that have an active role in that delivery chain are further referred to as cache servers 13 and are typically at the Edge of the network, close to the user 11. Such cache servers 13 can e.g. be part of a (virtual) Content Delivery Network (CDN), can perform Front-End-Optimization (FEO), and/or can be located in the network edge.

Web applications provide interactive Web content and represent the large majority of the Web pages available on the Internet today.

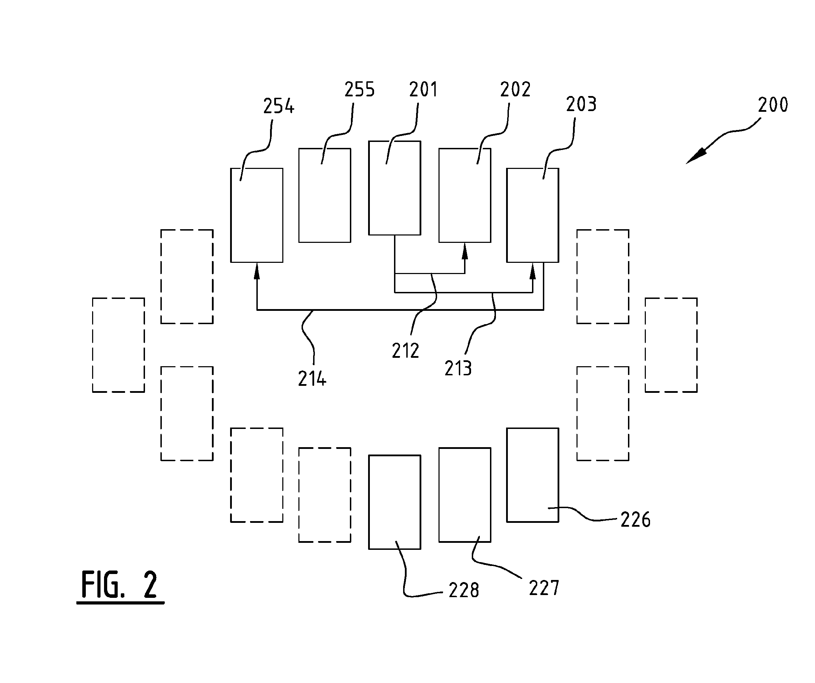

Web applications may be a combination of multiple individual Web resources like HTML (HyperText Markup Language), CSS (Cascading Style Sheets), JavaScript (ECMAScript), SVG (Scalable Vector Graphics), images, videos and other files. Web sites comprising multiple separate Web pages (i.e. separate parts), can be considered as a single Web application on its own, which is referred to in this specification as Multi Page Application 200 (MPA), and is illustrated in figure 2. The MPA 200 is an example of multi-part content for delivery using a method embodiment according to the present subject-matter. The MPA 200 comprises a number of independent pages 201-203, 226-228 and 254-255. Dependent pages are shown in the figure in dashed lines. Each page, independent or dependent, is a part of the content. A number of potential interaction dependencies (link from a page to another page, which can be activated or followed by user interaction) are indicated with arrows 212 (showing a dependency from page 201 on page 202), 213 (showing a dependency from page 201 on page 203) and 214 (showing a dependency from page 203 on page 254). More dependencies may exist in the MPA 200, but are not shown.

Alternatively, modern Web applications may be authored to contain only a single root (the main page) in which different page fragments are loaded, based on user interaction. Each page fragment is a part of the content. Such Web applications are further referred to in this specification as Single Page Application (SPA).

It is noted that the terms Multi Page Application (MPA) and Single Page Application (SPA) will be found clear to the skilled person in view of the accompanying explanation provided in this specification. Both MPAs and SPAs may comprise interactive content comprising multiple parts. In MPAs, the parts that comprise the interactive content are separate web pages. In SPAs, the parts that comprise the interactive content are separate fragments of web pages. It is noted that a MPA may also comprise one or more SPAs, by allowing that one or more of its pages potentially comprises multiple page fragments.

When a user 11 installs a Web application (SPA or MPA) on his device, he needs to wait for the installation to be completed (and rendered) before he can use the Web application (e.g. when installing from application delivery platforms). Moreover, when a user 11 browses a Web application with his device, he needs to wait for the next part(s) (i.e. pages or page fragments) to be delivered and rendered before he can continue to work with the Web application. For bulky Web applications, that contain many parts, the waiting time may be in the order of minutes. The following are examples of bulky Web applications:
- Web applications containing a lot of geographical data.
- Web applications using catalogues where the user 11 typically clicks on e.g. a catalogue item, an item in search results, or in a word cloud.
- Games where the user 11 can advance in any direction and start any kind of action.
- eBooks where the user 11 may decide to turn immediately to the page or chapter that stirred his interest.

A problem occurs if a user 11 starts to run and use (i.e. interact with) the Web application - as soon as sufficient parts are available - and then starts an action for which the required parts are located at the end of the bulky delivery, he will still have to wait until the installation process completes.

Moreover, all Flash applications (e.g. SWF - Small Web Format, previously called Shockwave Flash) must be replaced by Web applications, due to the phasing-out of user agent 12 plug-ins (NPAPI - Netscape Plugin Application Programming Interface).

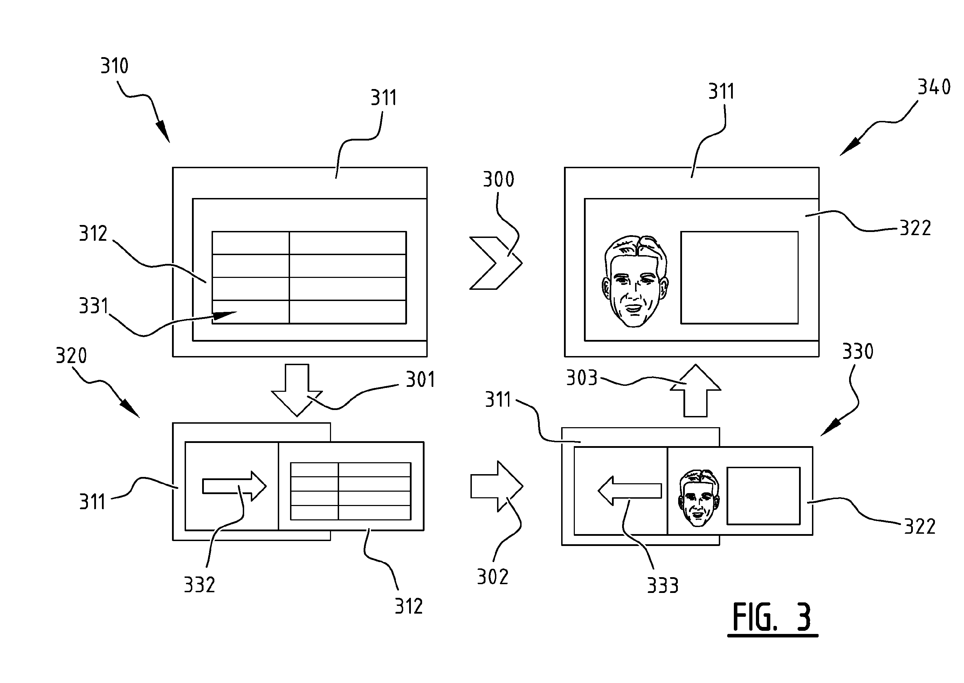

Figure 3 illustrates schematically another example of multi-part content for delivery using a method embodiment according to the present subject-matter. The multi-part content is a Single Page Application (SPA), and uses Model Driven Views (MDV). An SPA is a Web application that has a single root (the main page, 311) and typically one or more parts (page fragments, e.g. 312 and 322) that are designed to fit into the main page 311. Which page fragment(s) to load in the main page 311 at any one time typically depends on the user's interaction. The main page 311 as well as the individual page fragments 312 and 322 are typically separate Web resources, i.e. parts of the multi-part content. As for other Web applications, an SPA also may contain additional Web resources like CSS, JavaScript, SVG, WOFF (Web Open Font Format), images and data. These additional Web resources may have a close relationship with the main page 311 and the page fragments 312 and 322.

In particular, Figure 3 illustrates the transition 300 in an SPA from a first version 310 of the main page 311 to a second version 340 of the main page 311, via a first intermediate version 320 of the main page 311 and a second intermediate version 330 of the main page 311. The intermediate transitions are indicated with the arrows 301-303, and together are equivalent to transition 300.

The first version 310 comprises the main page 311 and a first part 312, for example a page fragment comprising a table.

When a user 11 clicks or would click on a data item 331 in the table, the Web application may be configured to replace the first part 312 (i.e. the table page fragment) by a second part 322, for example a page fragment comprising personal information associated with the data item 331.

The first intermediate version 320 shows how the Web application would swap out 332 the first part 312 from the main page 311. The second intermediate version 330 shows how the Web application would swap in 333 the second part 322 into the main page 311.

The swapping in 332 and out 333 together result in the second version 340 of the main page 311, which comprises the second part 322 with the personal information.

Figure 3 therefore illustrates how a user interaction may interact with (i.e. cause change in) interactive content. There exist functional dependencies between the main page 311 and the first part 312 on the one hand, and between the main page 311 and the second part 322 on the other hand, since these two parts 312 and 322 are respectively configured to be contained within the main page 311. There also exist potential interaction dependencies between the first part 312 and the second part 322, since clicking (or otherwise selecting) a data item 311 in the first part 312 would lead to the second part 322.

The difference between a functional dependency and a potential interaction dependency can therefore be seen to be the following. A functional dependency is a hard-coded loading dependency of a first structural item on a second structural item, such that the first structural item requires the presence of the second structural item in order to be represented. A potential interaction dependency, on the other hand, is a potential dependency of a first item on a second item due to potential user interaction with a first item, wherein the first item may be represented by itself without the second item, and wherein the second item is activated by the user interaction.

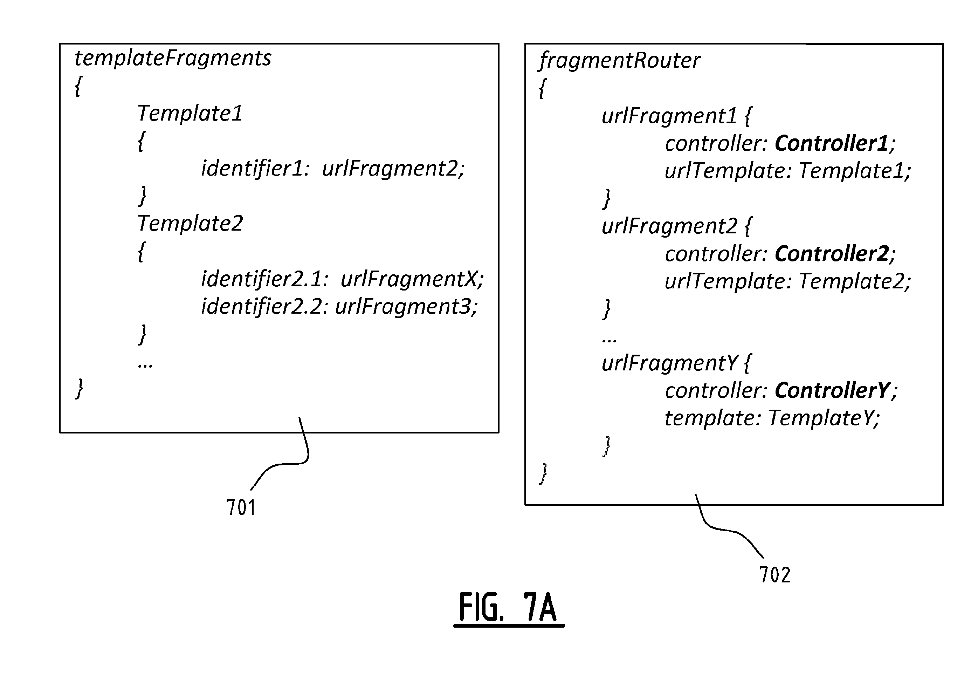

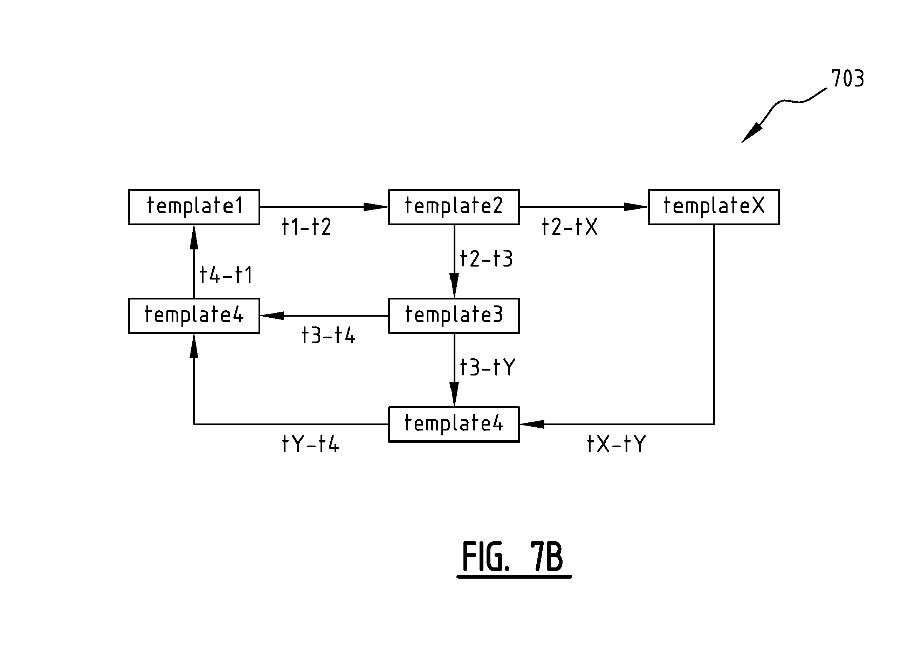

Typical SPA resource linking is illustrated in figures 7A and 7B. The root Web resources (the main page 311) of an SPA (as shown in Figure 3) typically contains the HTML head and body that provides a shell for the SPA's fragment Web resource(s). Each fragment Web resource typically has at least one HTML template 701 and one JavaScript controller 702, that are typically subject to bi-directional data binding. The HTML template 701 can further refer to other Web resources like CSS, WOFF, and images. The JavaScript controller 702 is responsible to CRUD (Create Retrieve Update Delete) the data, typically in JSON (JavaScript Object Notation) format, from a local or remote database service. When the data is received, it is fed into the HTML template 701 thanks to the bi-directional data binding. Such a configuration separates data from presentation. The configuration of the interlinking 703 between the various fragment Web resources is typically done via URL (Uniform Resource Locator) routing where the activation of typically a fragment identifier in a first fragment Web resource will lead to a potentially new set of Web resources and potentially new data. In the interlinking 703 shown in Figure 7B, a number of templates (template 1 - templateX) are shown, as well as their corresponding functional and potential interaction dependencies (e.g. t1-t2 from template1 to template 2).

SPAs may typically be more responsive than non-SPAs (MPAs) since only one or a few fragments need to be delivered to the user agent 12 instead of a complete new Web page. The separation of data from presentation further allows to reduce or minimise the communication to data packages only. Also, if the fragment Web resources are data independent, they can be cached for later re-use.

A known technique for content delivery uses a client-side JavaScript program that aims to (1) understand the load sequence of Web applications, (2) control resource access, and (3) enable streamed fragments from the cloud to be re-assembled inside the user agent 12. This technique aims to split, say, a bulky monolithic Flash application (e.g. SWF) into several Flash fragments, deliver each Flash fragment separately to the client, and re-assemble them again inside the user agent 12. The advantage is that the bulky Flash application does not need to be first completely downloaded on the user's 11 device before the user 11 is able to run the Flash application. Instead, just a first Flash fragment needs to be delivered with enough functionality to get the user 11 started. The remaining fragments of the Flash application are then loaded and re-assembled asynchronously (in background) by the JavaScript program.

The functionality described above is also referred to as Software-Defined Application Delivery (SDAD), which splits a Flash application in several parts based on a JavaScript program running on the end-user 11 device (i.e. at the user agent 12). The relationships between the parts are registered by studying actual user interaction, by recording actual user interactions of (a selection of) the users 11, and by sending the recorded actual user interactions to a central (cloud-based) server. These recorded actual user interactions are used by the central server to cut up the application in two or more smaller parts, which are sent to the next user(s) 11 that request(s) the application. So, instead of downloading the complete Flash application, the computed solution downloads one or more smaller parts of the application that together allow the user 11 to already start working with the application. The remaining parts are downloaded asynchronously while the user 11 is already working with the application, and are recombined into the larger Flash application, also by a JavaScript program.

This known technique is being challenged by (1) the gradual phasing out of Flash applications, or more generally the ongoing phasing out of plug-ins in browsers, in favour of Web applications, and (2) by a new streaming format for packaging of Web applications, called Streamable Package Format (SPF), that is currently in draft edition.

Moreover, this known technique requires that actual user interactions with the interactive web content are recorded *in situ*. This is problematic, in that the first users 11 of a new web application cannot benefit from an improved delivery (until enough users 11 have interacted with the content so as to provide data for the server), and in that certain interactive web content, especially short-lived interactive web content that is useful for only one or a few users 11 or for only a limited time, cannot benefit from an improved delivery either.

Another known technique relates to the Streamable Package Format (SPF), part of Packaging on the Web, is being standardized by the W3C (World Wide Web Consortium). The SPF behaves as a more intelligent ZIP package but nothing more than that. As for ZIP packages, the SPF does not provide information on how the different resources are coupled to each other.

An SPF for a Web applications is conceptually similar to a multipart HTTP (HyperText Transfer Protocol) reply wherein each part contains a single Web resource for that Web application. (A single Web resource may in turn consist of a combination of Web resources in e.g. ZIP or SPF format.) Once sufficient resources have been delivered to the user agent 12, the Web application can be started without the need to wait for all resources to arrive at the user agent 12.

The problem is that, if a user 11 starts to run and use the Web application - as soon as sufficient parts are available - and then starts an action for which the required parts are located at the end of the SPF, he will still have to wait until the installation process completes. There exists no single order in which Web resources can be delivered that covers all paths that a user 11 can take in a Web application. Therefore, the problem of reducing latency when installing a bulky web application remains.

It may be considered to use (HTTP2) push notifications to replace SPF over one or more streams.

Using a so-called HAR (HTTP Archive) file, the server is able to make use of the new push feature from HTTP2 to avoid the user agent 12 from having to make several requests. Unfortunately, the HAR file may contain user-specific, possibly private information that must not be sent to other users 11.

Using a so-called manifest file, the server is able to make use of the new push feature from HTTP2 to avoid the user agent 12 from having to make several requests. Unfortunately, the manifest file is only available for Web applications that were designed to work off-line (without a network connection).

Using a so-called package file, the server is able to make use of the new push feature from HTTP2 to avoid the user agent 12 from having to make several requests. Unfortunately, the package file is only available for Web applications that were designed to be installed on the user's 11 device.

The HAR, manifest, and package files only provide Web application information on a high level which may be insufficient for bulky Web applications.

User agents 12 can proactively fetch Web resources in the background, for example, when a user 11 hovers over a link, in order to make sure that the required Web resources are present in the cache when the user 11 decides to actually click on the link.

However, the browser will need to send several requests (which is known as a so-called HAR waterfall) before all of the required Web resources are available in the local cache, and before being able to make a next request, it will have to parse the previously received Web resources. Only when all Web resources are in cache, the user agent 12 can (1) start to pre-render the Web page in the background waiting for the user 11 to click on the link, or alternatively (2) start to render the Web page in the foreground as soon as the user 11 decides to actually click on link.

The WHATWG (Web Hypertext Application Technology Working Group), precursor to possible standardizations in HTML5 and beyond, is looking into exposing dependency and weight management. The Working Group aims to provide declarative means to expose (1) the relationships between resources (dependencies) and (2) the importance of resources (weight).

However, in the proposed implementation, the information is *hidden* inside the individual Web resources meaning that (1) the Web resources first have to be fetched and parsed before being able to act accordingly, (2) the developer has no clear overview of his Web application, and (3) the effect of the user's 11 interaction on resource dependencies and priority is not handled. Furthermore, the proposal does not take packaging into account.

Some web applications that use a lot of data, like Google Maps, OpenStreetMap, and Bing Maps, do not install the data on the user's 11 device. For instance, Google Maps retrieves the map tiles using XHRs (XMLHttpRequests), wherein the XHRs are launched when the user 11 interacts (zoom, pan, etc.) with the map. TomTom Route Planner retrieves the tiles using HTTP GET messages, that are also launched when the user 11 interacts (zoom, pan, etc.) with the map. In other words, no prefetching is done.

Embodiments according to the present subject-matter on the other hand concern, among other things, Web application installation where all the data is downloaded to the user's 11 device (e.g. in-car navigation maps that are bought from a car retailer).

In case there would be pre-fetching, it could for example be (1) a back-end on the source server 14 that could push the data or (2) a JavaScript program in the user agent 12 that could pre-fetch the data.

It is an objective of some embodiments of the present subject-matter to provide an intermediate 13 in the delivery chain (i.e. a cache server 13) with the necessary knowledge to deliver the Web resources in a better order, preferably in the best possible order, relieving the source server 14 as well as the user agent 12 from this task.

When a Web application is being installed in the background while the user 11 is already using it, the risk of having to have the user 11 wait for a specific Web resource (after performing an interaction) can be mitigated by providing the functional dependencies as well as the potential interaction dependencies between the Web resources. These functional dependencies and potential interaction dependencies can be comprised in content metadata. The content metadata can be used to determined a delivery order in which to deliver said Web resources (i.e. the set of parts of the content to be delivered). Then, the set of parts can be transmitted to or received by the client in that delivery order, which allows to send the interactive content in a more efficient way in view of the user's 11 interaction with it.

In a preferred embodiment, a format for a new type of Web resource is proposed to contain this and other content metadata, like e.g. the information already available in the HAR, manifest, package files, and/or a derivation thereof.

Moreover, in a preferred embodiment, a new HTTP response, preferably a 2XX status code, is proposed to inform the user agent 12 that the requested Web resource has been prioritized in the package that is being installed.

Embodiments of the present subject-matter may be applied to the new SPF format as well as to other techniques to install Web applications, such as HTTP2 push.

The content metadata can be used to maximize the pre-fetch and push capabilities of HTTP2 for any given Web application. Both of these HTTP2 capabilities are valuable to a cache server 13, to an origin server 14 (for push) or to a user agent 12 (for pre-fetch).

The role of the content metadata is to allow to (pre-fetch or) push the content in the best possible order from the (origin server 14 or) cache server 13 to the user agent 12, taking the user's 11 potential actions into account.

In particular, pre-fetching can be hinted by using relation types in the HTTP header using the "Link:" tag, or in the HTML page using the <link> or <meta> element. However, the scope of these relation types is limited, in that it does not take user interactions into account. The hinting is mainly targeted to speed up the fetching process by alerting the user agent 12 in advance that he needs to fetch a resource before he actually needs it.

Consider the example that a user 11 browses the Internet and arrives on a bulky MPA (Multi Page Application Web site).
The Web resources for the first view of the bulky MPA are loaded and rendered by the user agent 12. The remaining Web resources are however not loaded because that would require time and bandwidth that may not be needed when the user 11 decides to abandon the site without further ado. The user 11 decides, however, to continue exploring the MPA while hovering the mouse over a link that may contain the information he is looking for. The user agent 12 will request the initial Web resource in the background but does not yet know the related Web resources (without parsing the first one), which may also not yet be available in the user agent's 12 cache. He will need to send multiple requests before all required Web resources are available in the cache. When the user 11 clicks the link, he may therefore have to wait for the several more Web resources to be delivered, parsed, interpreted, and rendered.

Consider the example that a user 11 browses the Internet and arrives on a bulky SPA (Single Page Application Web site).
The Web resources for the initial view of the bulky SPA are loaded and rendered by the user agent 12. The remaining Web resources are however not loaded because that would require time and bandwidth that may not be needed when the user 11 decides to abandon the site without further ado. The user 11 decides, however, to continue exploring the SPA while hovering the mouse over a link that may contain the information he is looking for. The user agent 12 will request the corresponding HTML template (Web resource) in the background but does not know the related Web resources like CSS, WOFF, images, and/or JavaScript controller(s), that may not yet be available in the user agent's 12 cache. When the user 11 clicks the link, he will have to wait for the Web resources to be downloaded, parsed, interpreted, and rendered.

For both of the above examples, embodiments of the present subject-matter allow to reduce the waiting time for the user 11.

In some embodiments, the content metadata comprising the functional dependencies and the potential interaction dependencies between HTML (templates), JavaScript (controllers), CSS, WOFF, images and other Web resources can be provided as a separate Web resource. This separate Web resource can be made available to the origin server 14, to the cache server 13, and/or to the user agent 12, either as a single or as multiple dedicated Web resource(s), or combined with one or more other Web resource(s). Using the content metadata, the cache server 13 (or the origin server 14) can better pre-fetch and push the Web resources even before the user 11 or user agent 12 starts asking them.

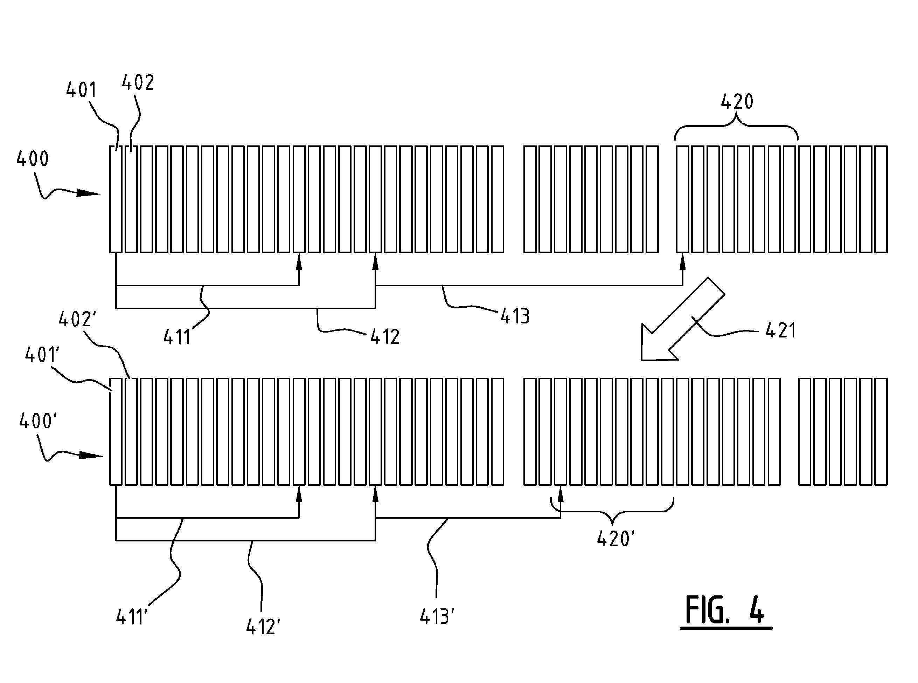

In another embodiment, dependent resources can be combined into a package in ZIP or SPF format. These packages can again be combined into a hierarchical dependency tree. However, this alternative solution is prone to duplication of individual Web resources that are used in two or more packages. Furthermore, hierarchical trees, like those proposed by the WHATWG, do not support hybrid trees required to support round-robin user interactions, or circular or hybrid user interactions (cf. example in figure 4).

Consider the example that a user 11 browses an HTML application store, finds an interesting but bulky Web application, and decides to install it. Using a ZIP format, the download would take 5 minutes. The authors therefore chose to use the SPF format so that the user 11 can start the application while it is still downloading. However, after starting the application, the user 11 navigates to a view or data area that is at the end of the authored SPF. In the best case, the user agent 12 makes a separate request for the required Web resource(s) but in the worst case, the user 11 will have to wait minutes for the download to finish before the required Web resource(s) are available. Moreover, the risk exists that the same Web resource will be sent twice: once as a response to the separate request and once by the ordinary SPF installation process.

The relationship between the user's 11 possible interactions and their correlation to the Web resources may be externalized by an analysis tool or by an authoring tool, and/or may be pre-defined by the author, and may be put into a separate resource. This separate resource can be made available to the origin server 14, to the cache server 13, and/or to the user agent 12 either as a single or multiple dedicated Web resource(s) or combined with one or more other Web resource(s). Using this content metadata, the cache server 13 can optimally stream the Web resources by changing the order in which the Web resources are delivered to the client in the SPF.

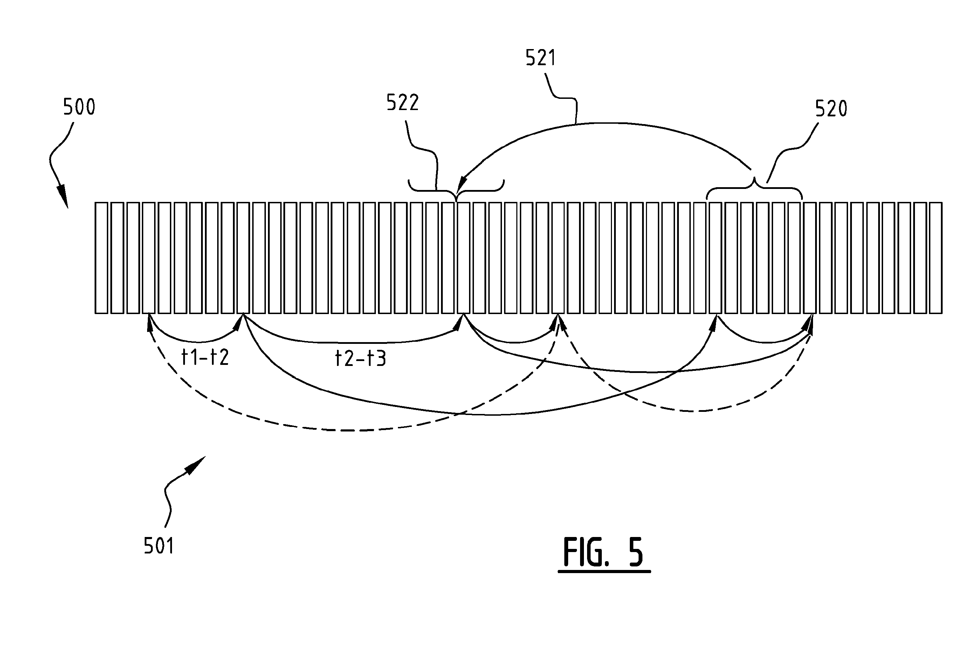

Figures 4 and 5 illustrate the functional dependencies and the potential interaction dependencies between Web resources belonging to an MPA (Figure 4) respectively an SPA (Figure 5).

Figure 4 shows on the top half of the figure a first delivery order 400 for the MPA, comprising a plurality of parts, of which two parts are indicated 401-402. Each part represents a separate Web page (or Web resource). The order is to be read from left to right, meaning that part 401 is to be delivered/obtained before part 402. The first delivery order 400 may for example be a default order, a random order, or an order pre-defined by the content author. Several functional dependencies have been indicated in the figure by grouping related parts. One such grouping is grouping 420, which forms a functional dependency, in that all of the parts 420 are structurally interrelated. Moreover, several potential interaction dependencies have been indicated in the figure with arrows 411, 412 and 413. These potential interaction dependencies represent potential dependencies from first parts of the content to second parts of the contents, due to user interaction, in that a user 11 interacting with said first parts requires said second parts. Potential interaction dependency 413 shows for example that an out-of-order dependency on grouping 420 exists.

On the bottom half of the figure, a second delivery order 400' is shown for the MPA, comprising the same plurality of parts as delivery order 400. Again, two parts 401'-402' are indicated, as well as functional dependencies (e.g. grouping 420') and potential interaction dependencies 411', 412' and 413'. The second delivery order 400' has been determined 421 based on the functional dependencies and the potential interaction dependencies of the parts. In the second delivery order 400', grouping 420' of a number of parts has been moved forward in the delivery order, meaning that it will be delivered/obtained earlier than would be the case in the first delivery order 400. It can be seen that this re-ordering adheres to the potential interaction dependency 413/413', which is dependent on grouping 420/420' - also, the functional dependency of grouping 420/420' is adhered to, since the grouping 420' is re-ordered as a whole. Nevertheless, if a part of the content can be delivered/obtained separately, without functional dependencies, it will be understood that that part may be re-ordered singularly.

Figure 5 shows a delivery order 500 for an SPA, comprising a plurality of parts. Again, the delivery order 500 may initially, for example, be a default order, a random order, or an order pre-defined by the content author. As in Figure 4, a functional dependency is indicated by grouping 520 of parts. Moreover, a number of potential interaction dependencies 501 are indicated, of which two potential interaction dependencies are explicitly named t1-t2 and t2-t3. It will be understood that these potential interaction dependencies 501 may correspond for example with the potential interaction dependencies 703 of Figure 7B, or may be otherwise defined.

Figure 5 further shows that the delivery order 500 may be (re-)determined based on the functional dependencies 520 and the potential interaction dependencies 501. In the (re-)determined delivery order, grouping 520 is moved 521 forward in the delivery order 500, to location 522. It can be seed that the entire grouping 520 (interrelated by a functional dependency) is therefore moved 541 according to one or more of the potential interaction dependencies 501, in order to deliver/obtain grouping 520 earlier than would be the case in the initial delivery order 500.

The cache server 13 can also apply this technique for the next possible set of Web resources that the user 11 will be able to select based on his current selection. More in general, methods according to the present subject-matter may comprise re-determining the delivery order so as to improve the delivery according to newly determined potential interaction dependencies. In that case, the re-determined delivery order is determined based on the functional dependencies, and based on potential interaction dependencies that are determined prior to user interaction with (parts of the) content still to be transmitted, since the user presumably has interacted with (or had the opportunity to interact with) the (parts of the) content that has/have already been transmitted.

Embodiments of the present subject-matter may be applicable to any kind of Web resource including data, multimedia (images, sound, video) and games. They are also applicable to any kind of communication channel including WebSockets.

In a further embodiment, the user agent 12 - or a Web application developer who is able to override the user agent's 12 default behavior - can make use of the functional dependencies and potential interaction dependencies to change the weight (cf. the WHATWG proposal discussed above) of the various Web resources accordingly, and can then use this information to determine HTTP2 priority for the Web resources.

The content metadata comprising the functional dependencies and the potential interaction dependencies can have any of a number of suitable formats, from a simple list of lists of Web resources, a simple 2-dimensional table, to a complex formula with multiple parameters. The content metadata can also contain statistical, heuristic, or artificial intelligence information and their associated parameters about presumed usage patterns of the Web resources allowing for even more intelligent Web resource pre-loading and discarding strategies.

In a further developed embodiment, this content metadata is formatted using the Resource Description Framework (RDF).

In a further developed embodiment, the content metadata is added as a separate section in the manifest or package files, optionally in a comment section.

In a further developed embodiment, the content metadata is included in the Web application's main or root Web resource which is normally the initial HTML response to the initial HTML request. In order to be able to distinguish the content metadata in the initial HTML response from the rest of the response, a new MIME (Internet media type) type is introduced, e.g. multipart/content metadata. In the first part of the multipart, the content metadata can be provided, while the second part then contains the original HTML message.

In a further developed embodiment, the content metadata is provided as one or more separate Web resources. The URLs to those Web resources may be provided in the main or root Web resource of the Web application. In the response HTML message to a content metadata request, a new MIME type can be introduced, e.g. content metadata.

In an alternative embodiment, the location of the content metadata Web resource is calculated or derived based on the location of the requested Web resource. For example, the content metadata Web resource for the request http://www.example.com/main.html can be http://www.example.com/main.map.

In an alternative embodiment, the content metadata is retrieved in one or more data messages in e.g. JSON format using e.g. XHR or WebSockets. It is advantageous to standardize the heading and/or layout of such messages to allow e.g. cache servers 13 to intelligently handle these messages.

In a further developed embodiment, the content metadata may comprise information on the user-specific nature of the individual Web resources for a specific Web application. By marking such Web resources, the cache server 13 will be able to cache more efficiently. Additionally, it will be able to fetch user-specific Web resources for a next user 11 from e.g. a local database or pre-fetch them from the origin server 13. Such user-specific data may e.g. be user-targeted advertisement, teasers, etc.
Additionally or alternatively, the content metadata may comprise information on the time-specific nature of the individual Web resources for a specific Web application. By marking such Web resources, the cache server 13 will be able to cache more efficiently. Additionally, he will be able to fetch time-specific Web resources for next requests from e.g. a local DB or pre-fetch them from the origin server 14. Such time-specific data may e.g. be time-based advertisement, teasers, etc. In a further developed embodiment, the time-specific content metadata is consistent with or replaces the Time-To-Live (TTL).
Additionally or alternatively, the content metadata may comprise information regarding the usage of Web resources. Certain Web resources may need to be visited only once, e.g. for purposes of registration, for completed game levels, for trial periods, for teasers or advertisement, etc. In such cases, there is no need to keep a copy of those Web resources in the user agent 12. By not removing such Web resources, the amount of required storage for the Web application would be higher than it needs to be.
Additionally or alternatively, the content metadata may comprise other information that is of importance to make the cache server 13 more application-aware such that it can more efficiently push Web resources to the client 12 and pre-fetch resources from the origin server 14. This reasoning also applies to the user agent 12.

The relationship between (1) the various Web resources from a Web application and (2) the user's possible interactions and their correlation to the Web resources is either externalized by the authoring tool(s) and/or composed by the author, preferably into a separate resource.

In a further developed embodiment, the content metadata that is transmitted from a server (an origin server 14 or a cache server 13) to the client 12 via an intermediate cache server 13 is not delivered to the user agent 12, but is pruned or deleted by the intermediate cache server 13, which removes some or all occurrences of (and links to) these kinds of Web resources from the other Web resources.

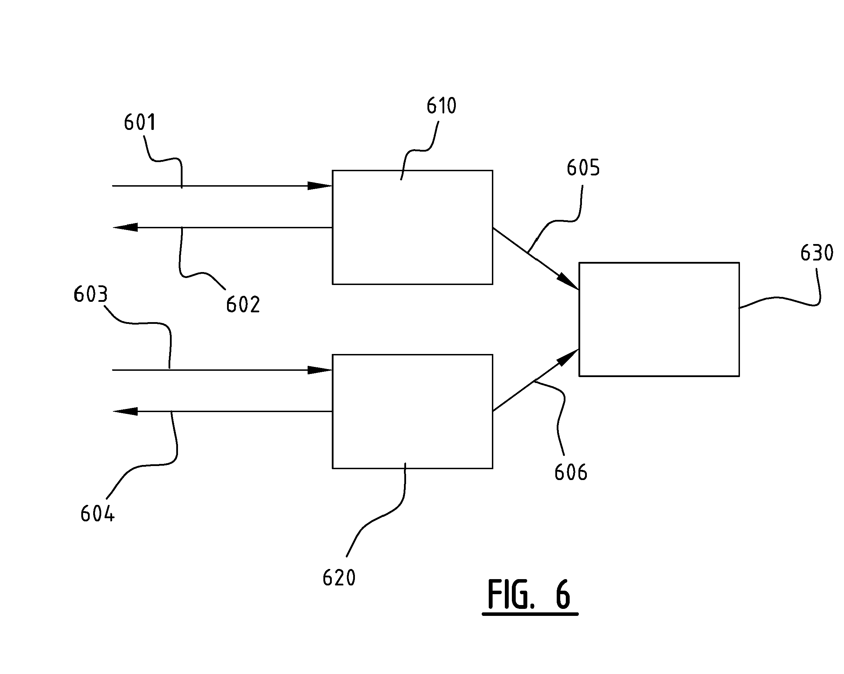

In a further embodiment, when the user agent 12 fetches a Web resource that is not yet available from the SPF, the cache server 13 may adapt the streaming accordingly and send a new HTTP 2xx status code back. The new HTTP 2xx status code means "an entity corresponding to the requested resource is prioritized in the SPF". In an alternative further embodiment, the requested Web resources are (HTTP2) pushed to the client 12 and removed from the SPF stream, or replaced with a reference to the pushed resource. Both delivery mechanisms are illustrated in Figure 6.

Figure 6 shows a functional architecture related to a further developed server embodiment according to the present subject-matter, with an SPF Streamer 610, an SPF Adaptation Module 620, and an SPF Program 630 (or SPF Document).

A use scenario is that a client (e.g. a user agent 12 or a cache server 13) fetches 601 a Web application. In response to this, the server replies 602 with an SPF stream, by getting 605 the next parts of the SPF Program 630.

When the same client fetches 603 a single, specific Web resource (i.e. a single part of the SPF Program 630), the server can reply 604, either by sending a suitable HTTP 2xx status code, or by pushing the single, specific Web resource and sending a HTTP 200 status code. In both cases, the server acts 606 on the SPF Program 630, respectively by re-ordering (i.e. determining a new delivery order for) the SPF Program 630, or by removing the single, specific Web resource from the rest of the SPF Program 630 to be delivered via the SPF stream reply 602.

In this manner, the server prevents double delivery of the single, specific Web resource, while prioritizing its delivery to the client.

In further developed embodiments, it may be attempted to pre-load as many Web resources as possible when the communication channel has high capacity, or is free of charge (e.g. home Wi-Fi), or to pre-load only the most relevant ones when the communication channel is limited, or is more expensive (e.g. LTE - Long Term Evolution). In specific embodiments, this may be attempted by the cache server(s) 13.

A person of skill in the art would readily recognize that steps of various above-described methods can be performed by programmed computers. Herein, some embodiments are also intended to cover program storage devices, *e.g.* digital data storage media, which are machine or computer readable and encode machine-executable or computer-executable programs of instructions, wherein said instructions perform some or all of the steps of said above-described methods. The program storage devices may be, *e.g.* digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the present subject-matter. It will thus be appreciated that those skilled in the art will be able to devise various arrangements that, although not explicitly described or shown herein, embody the principles of the present subject-matter and are included within its spirit and scope. Furthermore, all examples recited herein are principally intended expressly to be only for pedagogical purposes to aid the reader in understanding the principles of the present subject-matter and the concepts contributed by the inventor(s) to furthering the art, and are to be construed as being without limitation to such specifically recited examples and conditions. Moreover, all statements herein reciting principles, aspects, and embodiments of the present subject-matter, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present subject-matter. Similarly, it will be appreciated that any flow charts, flow diagrams, state transition diagrams, pseudo code, and the like represent various processes which may be substantially represented in computer readable medium and so executed by a computer.

Whilst the principles of the present subject-matter have been set out above in connection with specific embodiments, it is to be understood that this description is merely made by way of example and not as a limitation of the scope of protection which is determined by the appended claims.

In the present specification the expression "A and/or B" may be taken to mean "at least one of A and B".

## Claims

1. A method for delivering from a server to a client interactive content comprising multiple parts, wherein said content is associated with content metadata representing functional dependencies and potential interaction dependencies,
wherein a functional dependency represents a hardcoded loading dependency of a part of said multiple parts on another part of said multiple parts,
wherein a potential interaction dependency represents a potential loading dependency of a part of said multiple parts on another part of said multiple parts, due to potential user interaction with said content;
said method comprising at said server:
- determining a delivery order in which to deliver a set of parts of said multiple parts, taking into account said functional dependencies and said potential interaction dependencies; and
- transmitting said set of parts to said client in said delivery order;
wherein said potential interaction dependencies have been determined prior to user interaction with said content.

2. The method of claim 1, wherein said potential interaction dependencies are at least partially determined in at least one of the following ways:
- by automated prediction by said server, based on automated analysis of said content by said server; and
- by pre-definition by an author of said content.

3. The method of any previous claim, comprising:
- receiving from said client a request for transmitting a specific part of said content out of said delivery order; and
in response to said receiving, performing the following:
- re-determining said delivery order, in order to prioritize delivery of said specific part; and
- transmitting remaining parts of said content including said specific part to said client, according to said re-determined delivery order; or
in response to said receiving, performing the following:
- transmitting said specific part to said client, separately from transmitting said parts of said content to said client in said delivery order; and
- re-determining said delivery order, in order to prevent double delivery of said specific part; and said method optionally comprising transmitting a notification of any e-determining to said client; and/or
wherein said set of parts is transmitted to said client:
- in response to receiving from said client a request for transmitting said content to said client; or
- at least in part prior to receiving a request from said client for transmitting said content to said client.

4. The method of any previous claim, wherein said content metadata comprises at least one of the following:
- a user-specific indication indicating a specific user, to allow retrieval and/or deletion of at least a part of said multiple parts based on said specific user;
- a user group-specific indication indicating a specific user group, to allow retrieval and/or deletion of at least a part of said multiple parts based on said specific user group;
- a time-specific indication indicating a specific time, to allow retrieval and/or deletion of at least a part of said multiple parts based on said specific time;
- a usage condition-specific indication indicating a specific usage condition, to allow retrieval and/or deletion of at least a part of said multiple parts based on said specific usage condition; and
- a fingerprint adapted to uniquely identify a specific version of at least a part of said multiple parts, to allow versioning comparison of at least a part of said multiple parts based on said fingerprint.

5. The method of any previous claim, comprising transmitting said content metadata to said client; wherein said content metadata is transmitted:
- bundled with a manifest file describing said content to be transmitted; or
- bundled with a first part of said content to be transmitted initially; or
wherein said content metadata is transmitted as a separate web resource; and wherein:
- said content is accessible via a first uniform resource identifier;
- said content metadata is accessible via a second uniform resource identifier; and
- said second uniform resource identifier is derivable from said first uniform resource identifier; or said second uniform resource identifier is listed in said first uniform resource identifier.

6. A method for obtaining at a client from a server interactive content comprising multiple parts, wherein said content is associated with content metadata representing functional dependencies and potential interaction dependencies,
wherein a functional dependency represents a hardcoded loading dependency of a part of said multiple parts on another part of said multiple parts,
wherein a potential interaction dependency represents a potential loading dependency of a part of said multiple parts on another part of said multiple parts, due to potential user interaction with said content;
said method comprising at said client:
- receiving a set of parts of said multiple parts in a delivery order;
wherein said delivery order has been determined by said server, taking into account said functional dependencies and said potential interaction dependencies; and
wherein said potential interaction dependencies have been determined prior to user interaction with said content.

7. The method of claim 6, wherein said potential interaction dependencies have at least partially been determined in at least one of the following ways:
- by automated prediction by said server, based on automated analysis of said content at said server; and
- by pre-definition by an author of said content.

8. The method of any of the claims 6-7, comprising:
- transmitting to said server a request for transmitting a specific part of said content out of said delivery order; and
in response to said transmitting, performing the following:
- receiving remaining parts of said content including said specific part from said server, according to a re-determined delivery order; wherein said re-determined delivery order has been re-determined by said server, in order to prioritize delivery of said specific part; or
in response to said receiving, performing the following:
- receiving said specific part from said server, separately from receiving said parts of said content to said client in said delivery order; wherein said delivery order has been re-determined by said server, in order to prevent double delivery of said specific part; and
said method optionally comprising receiving a notification of any re-determining from said server; and/or
wherein said set of parts is received:
- in response to transmitting to said server a request for transmitting said content to said client; or
- at least in part prior to transmitting a request to said server for transmitting said content to said client.

9. The method of any of the claims 6-8, wherein said content metadata comprises at least one of the following:
- a user-specific indication indicating a specific user, to allow retrieval and/or deletion of at least a part of said multiple parts based on said specific user;
- a user group-specific indication indicating a specific user group, to allow retrieval and/or deletion of at least a part of said multiple parts based on said specific user group;
- a time-specific indication indicating a specific time, to allow retrieval and/or deletion of at least a part of said multiple parts based on said specific time;
- a usage condition-specific indication indicating a specific usage condition, to allow retrieval and/or deletion of at least a part of said multiple parts based on said specific usage condition; and
- a fingerprint adapted to uniquely identify a specific version of at least a part of said multiple parts, to allow versioning comparison of at least a part of said multiple parts based on said fingerprint.

10. The method of any of the claims 6-9, comprising receiving said content metadata from said server;
wherein said content metadata is received:
- bundled with a manifest file describing said content to be received; or
- bundled with a first part of said content to be received initially; or
wherein said content metadata is received as a separate web resource; and wherein:
- said content is accessible via a first uniform resource identifier;
- said content metadata is accessible via a second uniform resource identifier; and
- said second uniform resource identifier is derivable from said first uniform resource identifier; or said second uniform resource identifier is listed in said first uniform resource identifier.

11. The method of any of the previous claims, wherein said server is one of the following:
- an origin server communicatively coupled to said client, and storing said content; and
- a cache server communicatively coupled to said client and communicatively coupled to at least one of an origin server storing said content and at least one other cache server, wherein said content is obtained at said cache server respectively from said origin server or from said at least one other cache server.

12. A computer program product comprising computer-executable instructions for performing a method when the program is run on a computer, the method comprising the steps of any one of the methods of any of the claims 1-11.

13. A server for delivering to a client interactive content comprising multiple parts,
wherein said content is associated with content metadata representing potential interaction dependencies,
wherein a potential interaction dependency represents a potential dependency of a part of said content on another part of said content, due to potential user interaction with said content;
said server comprising:
- an order module configured for determining a delivery order in which to deliver parts of said content, taking into account said potential interaction dependencies; and
- a transmission module configured for transmitting said parts of said content to said client in said delivery order;
wherein said potential interaction dependencies have been determined prior to user interaction with said content.

14. A client for obtaining from a server interactive content comprising multiple parts,
wherein said content is associated with content metadata representing potential interaction dependencies,
wherein a potential interaction dependency represents a potential dependency of a part of said content on another part of said content, due to potential user interaction with said content;
said client comprising:
- a reception module configured for receiving said parts of said content in a delivery order;
wherein said delivery order has been determined by said server, taking into account said potential interaction dependencies; and
wherein said potential interaction dependencies have been determined prior to user interaction with said content.

15. A system for delivery of interactive content comprising multiple parts, comprising:
- a server according to claim 13; and
- a client according to claim 14, communicatively coupled to said server.
